(19) **Europäisches Patentamt**

**European Patent Office**

**Office européen des brevets**

(11) **EP 0 674 831 B1**

(12) **EUROPEAN PATENT SPECIFICATION**

(45) Date of publication and mention
of the grant of the patent:
**02.11.2000 Bulletin 2000/44**

(51) Int. Cl.⁷: **A01C 17/00**, A01C 15/00

(21) Application number: **95200608.8**

(22) Date of filing: **14.03.1995**

(54) **A method of spreading material, such as fertilizer or seed**

Streu-Verfahren, insbesondere für Samen oder Dünger

Méthode d'épandage notamment d'engrais ou de semences

(84) Designated Contracting States:
**AT CH DE DK FR GB LI NL**

(30) Priority: **28.03.1994 NL 9400486**

(43) Date of publication of application:
**04.10.1995 Bulletin 1995/40**

(73) Proprietor: **MAASLAND N.V.**
**3155 PD Maasland (NL)**

(72) Inventors:
• **van den Berg, Karel**
**NL-2971 BR Bleskensgraaf (NL)**

• **van der Waal, Pieter Jacob**
**NL-3145 LB Maassluis (NL)**

(74) Representative:
**Corten, Maurice Jean F.M. et al**
**Octrooibureau Van der Lely N.V.**
**Weverskade 10**
**3155 PD Maasland (NL)**

(56) References cited:
**EP-A- 0 410 520       EP-A- 0 472 855**
**EP-A- 0 537 857       WO-A-92/12620**
**FR-A- 2 675 011**

## Description

The invention relates to a method of using an implement for spreading a material, such as fertilizer or seed, under the control of a microprocessor in which, on the basis of values with regard to the working width, the speed of travel and the desired amount of material to be spread on a unit of area introduced into the microprocessor, a desired amount of material to be spread per unit of time is defined and used for the control of a metering device through the intermediary of a standard characteristic and/or algorithm stored in the microprocessor, while during the spreading of material, by means of a suitable programme provided in the microprocessor, on account of signals produced by a weight measuring unit and which represent the decrease in weight of the material, the value related to, and adapted to the desired amount of material per unit of time is corrected if it deviates from the measured amount of material spread per unit of time.

Such a method is known from European Patent Application No. 0537857.

By the said method it is feasible to check continuously during the spreading of material whether the amount of material spread complies with the desired amount of material to be spread, as previously introduced into the microprocessor, while the microprocessor takes action when the amount of material spread per unit of time deviates from the desired amount of material to be spread per unit of time. If the physical properties of the material to be spread are roughly equal to those of the standard material by means of which the standard spreading curve introduced into the computer has been determined, then, on the basis of measuring results gathered during operation, no adaptation or only a minor adaptation of the spreading curve taking a relatively short time will follow. As a result of this, the surface area covered with a too high or too low amount prior to the adaptation remains confined.

In actual practice, however, it has turned out that, e.g. even in one and the same batch or type of fertilizer, it happens that physical properties fluctuate with time. Thus it is not impossible that e.g. a certain type of fertilizer made by a first manufacturer and the same type of fertilizer made by a second manufacturer call for a different spreading curve when applied in one and the same implement. Also the conditions under which e.g. fertilizer is stored in a warehouse or silo have an effect on the physical properties of the material. Thus, for example, the relative humidity of air has a considerable effect on the physical properties and corresponding fertilizer spreading curve. This is caused by the fact that fertilizer is hygroscopic and extracts moisture from the air, making the granules heavier so that they flow less rapidly from the reservoir or hopper.

The invention has for its object to provide a method enabling to determine as early as feasible the spreading curve going with the material to be spread.

In accordance with the invention, this is achieved by introducing into the microprocessor, before spreading the material, a pre-determined adjustment factor attuned to the physical properties of the material to be spread, where-after the microprocessor adapts the defined value of the desired amount of material per unit of time by means of the said adjustment factor. Still before a first measurement with regard to the decrease in weight of material suitable to be used during the spreading of the material is available, a correction to the desired amount of material to be spread per unit of time has thus taken place. By the above method it is feasible to cover a surface area at a relatively high accuracy prior to the first usable measurement, even when different types of materials having different physical properties are spread.

In order to attune the desired and realized amount of material per unit of time to each other even more accurately, according to the invention, a method is adopted whereby, at the start of spreading the material, an adjustment test is conducted, implying that, prior to spreading the material, the initial weight of at least a part of the implement including the material to be spread or the initial weight of the material to be spread is determined, which value is then stored into the microprocessor, while during the spreading of material, with the aid of summing means, the adapted and possibly corrected, desired decrease in weight per unit of time of the material to be spread is summed, and an attention signal is supplied by the implement when the summed desired decrease in weight equals a pre-defined value, the attention signal being an indication that the implement has to be halted, whereafter, for the termination of the adjustment test, the weight of at least a part of the implement including the material to be spread or the weight of the remaining material to be spread is determined, where-after the weight of the actual amount of material spread, meaning the difference between the initial weight and the weight determined upon the attention signal for the adjustment test, is determined, whereafter the difference between the weight of the actual amount of material spread and the summed desired decrease in weight is determined, and where, in the event that there is a difference between the weight of the actual amount of material spread and the summed desired decrease in weight, the microprocessor determines a correction factor related to the difference, by which factor the adapted and possibly corrected value of the desired amount of material per unit of time is corrected. As a result of determining the weight in a stationary manner in case of application of the said method at the start of spreading the material and at the termination of the adjustment test, disturbing factors, such as possible shaking of the implement during operation, have hardly any or no effect on the measurement. Owing to this, the weight can be determined with great accuracy and it is feasible to determine with even greater accuracy whether the weight of the amount of material really spread deviates from the desired weight decrease. Hereafter, it is feasible to calculate a highly accurate correction factor on account of a possible difference in results from said measurements, by means of which correction factor the desired amount of material per unit of time can subsequently be corrected prior to operating again the implement for spreading material. In a preferred embodiment of the invention, an attention signal is produced when the summed adapted and possibly corrected desired decrease in weight per unit of time has reached the value of 60 kgs.

Because the physical properties such as those of fertilizer may change during operation, too, e.g. as a result of moisture extraction from the air, the invention also relates to a method whereby the implement is provided with summing means which, during the spreading of material, sum the adapted and possibly corrected value of the desired amount of material per unit of time and the value of the amount of material really spread, where, after a pre-determined number of summations, the difference between the two summations is determined and compared against a threshold value previously introduced into the microprocessor, and where, if this threshold value is exceeded, a correction factor is determined on account of the magnitude of this excess, by means of which correction factor the said value of the desired amount of material per unit of time is corrected again. In certain conditions it may happen that during the said adjustment test, too, a correction to the adapted desired amount of material per unit of time takes place. Such is the case if, during the adjustment test, the difference between the two summations exceeds the threshold value introduced previously. In a preferred embodiment of the invention, the threshold value is preferably 5 kgs. The calculation of the correction factor during the "travelling" adjustment test is as follows:

| start adjustment test | | | end adjustment test |
|---|---|---|---|
| | | 1st correction | 2nd correction |
| A | $\Sigma(\Delta M)_{meas1}$ | $\Sigma(\Delta M)_{meas2}$ | $\Sigma(\Delta M)_{meas3}$ |

$$\Sigma(\Delta M)_{meas} \qquad \text{total decrease in weight measured}$$

$$\text{Correction new} = \frac{\text{Corr.}_1 \cdot \Sigma(\Delta M)_{meas1} + \text{Corr.}_2 \cdot \Sigma(\Delta M)_{meas2} + \text{Corr.}_3 \cdot \Sigma(\Delta M)_{meas3} + \text{Corr.}_1 \cdot \Sigma(\Delta M)_{meas.\ tot.}}{\Sigma(\Delta M)_{des}}$$

$$\Sigma(\Delta M)_{meas\ tot.} = \text{Mass}_{start} - \text{Mass}_{end} - \Sigma(\Delta M)_{meas1} - \Sigma(\Delta M)_{meas2} - \Sigma(\Delta M)_{meas3}$$

where: $\Sigma(\Delta M)_{meas}$ = summed decrease in weight measured

$\Sigma(\Delta M)_{des}$ = summed decrease in weight desired

A = hardware starting-up time

According to a further aspect of the invention, a method is adopted whereby, after the difference between the two summations has been determined for a first time, the difference is time and again determined over the same magnitude of the pre-determined number of summations as soon as, for both the desired amount of material per unit of time and the corresponding amount really spread, a new summation value has been supplied to the summing means. In this manner, the difference between said values is each time determined by means of the progressive average of the two values.

According to still another aspect of the invention, a method is also adopted, by which the first correction factor determined by the microprocessor during operation is permitted to represent a value which results in that the difference between the original value of the desired amount of material per unit of time and the corrected amount is not more than 10%.

According to a further aspect of the invention, a method is also adopted, whereby each subsequent correction factor determined by the microprocessor is permitted to represent a value at which the difference amounts to not more than 5%. With the said methods it is taken for granted that a first adaptation of the desired amount of material per unit of time may be a relatively large adaptation, whereas each subsequent correction requires a smaller adaptation and consequently should take place with a smaller step. Hereby it is obviated that an overcorrection takes place due to successive application of a relatively large correction factor, which overcorrection should be followed by a subsequent correction to compensate it. As a result of this, relatively numerous corrections are needed before a relatively accurate value has been reached.

According to a further aspect of the invention, a method is adopted, whereby an attention signal occurs after the maximum difference of 5% has been applied three times in succession. The said method assumes that, in the event that a difference of 5% has been applied three times, this is an indication of the fact that disturbing factors are present, as a result of which the material to be spread does not pour out conformably to expectations. The latter may be due to, for example, a stoppage near a discharge opening in the reservoir or a malfunctioning shut-off valve.

The invention further relates to an implement for the application of said method.

By way of illustration of the invention, an embodiment of an implement for spreading material by said methods will now be described with reference to a schematic diagram.

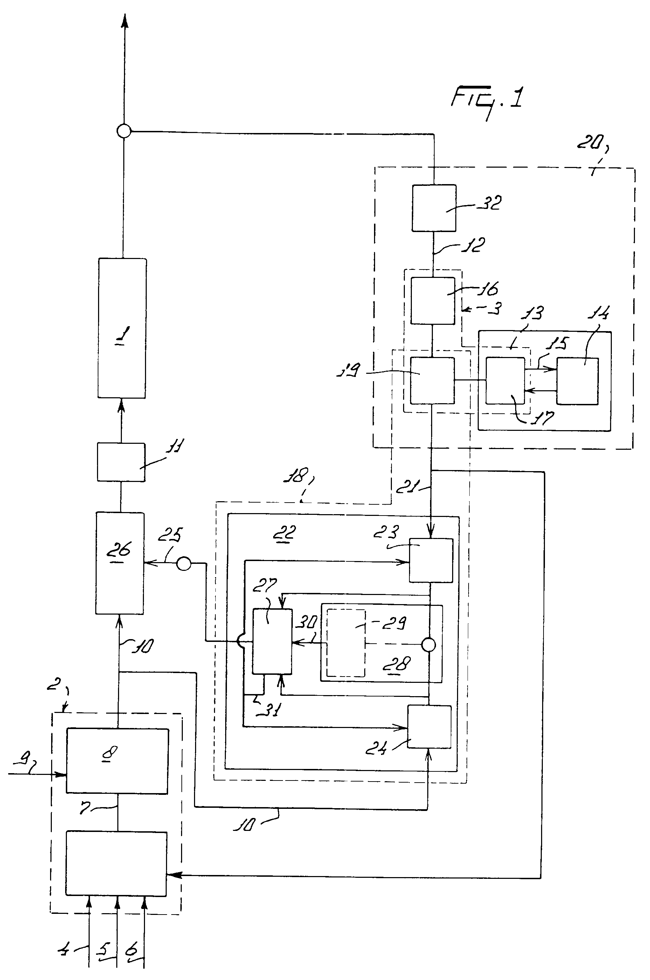

Figure 1 shows a schematic diagram of an electronic measuring and control system according to the invention.

Figure 1 comprises a schematic diagram of an electronic measuring and control system including a metering device 1, a microprocessor 2 and weight measuring correction means 3.

The operation of the system is as follows:

The microprocessor 2 determines a desired amount of material per unit of time 7 (kg/s), e.g. in the event of fertilizer spreading, on the basis of the desired dose 4 (kg/m$^2$), working width 5 (m) and travelling speed 6 (m/s), and supplies it to adjusting means 8 through a line. Through the medium of e.g. a keyboard, an adjustment factor 9 is supplied to the adjusting means 8, said adjustment factor 9 having been determined previously. In this connection, the adjustment factors 9 should be attuned to the types of material to be spread. The adjustment factors 9 for the different types of material and/or the same types of material from different manufacturers may be established by experiment by the manufacturer of the electronic measuring and control system and be included in the instructions for use supplied with the system. Before taking to spread a certain type of material, the instructions for use should be consulted and the adjustment factor 9 corresponding with the manufacturer of the respective material be found and subsequently be introduced into the adjusting means 8. The desired amount of material per unit of time 7 is then adapted in the micro-processor by means of the adjustment factor 9. By means of a standard characteristic and/or a standard algorithm 11, a control signal to adjust the metering device 1 is derivable from the adapted, desired amount of material per unit of time 10.

By means of the metering device 1, a discharge aperture related to the adapted, desired amount of material per unit of time is adjusted, so that per unit of time a number of kilograms of material flows out of the hopper of the implement for spreading material. How many kilograms at a certain point of time are present in the hopper is measured by a weight measuring unit 32, e.g. a weighing cell. For this purpose, the weight measuring unit 32 supplies a signal representing said weight to line 12 and this signal is subsequently applied to the weight measuring correction means 3. To enable the weight of the implement also to be determined when it is in an oblique position, the weight measuring correction means 3 comprise a filtering and correction unit 13 and a correction factor determining sensor 14. The filtering and correction unit 13 filters on one hand the output signal of the weight measuring unit 11 (weighing cell) on the line 12, and on the other hand the output signals of the correction factor determining sensor 14 on line 15. In the embodiment of the invention according to Figure 1, the correction factor determining sensor 14 is a clinometer or angle measuring cell, whose output signals, resolved into two mutually perpendicular components, are supplied to the line 15. So, the angle measuring cell is sensitive in two directions and is thus capable of determining the weight of the implement also when the implement is in an oblique position. During operation of the implement, disturbances arise due to e.g. vibrations of the power-take-off shaft, shocks resulting from travelling on uneven ground, etc. Filters 16 and 17 are utilized to minimize these disturbances. The filters 16 and 17 are designed as low-frequency band-pass filters. The filter 16, which filters the signal from the weight measuring unit 32, is a filter having an adjustable bandwidth, with the adjustment being made by hand or from a microprocessor 18. In actual practice, a filter 16 having a large bandwidth is chosen when the hopper is being filled, because such a filter entails a relatively small time delay, and consequently, the weight of the hopper including its contents can be read out almost immediately. During travelling on a parcel of land, undesired frequencies may occur due to unevennesses in the field. As these frequencies are very impeding to an appropriate weight determination, it is desirable to filter them out to the maximum extent feasible. To achieve this, the width of the passband of the filter 16 is limited during travelling on the parcel of land, so that an additional filtering of high-frequency components in the signal delivered by the weight measuring unit 32 is obtained. In the filtering and correction unit 13 there are also provided calculating means 19, in which the signal output by the filter 16 of the weight measuring unit 32 is corrected. This correction takes place by means of the signals supplied through the filter 17 by the correction factor determining sensor 14. Hereinafter, it will be further detailed how the correction itself is implemented.

The weight measuring correction means 3 and the weight measuring unit 32 constitute an electronic measuring device 20, by which the corrected instantaneous weight is supplied, through a line 21, to the microprocessor 2 where it can be shown on the screen of a display device and/or be stored in a memory.

Furthermore, in the microprocessor 18, the corrected instantaneous weight is supplied to mass-flow adjusting means 22 through the line 21. By means of the mass-flow adjusting means 22 it is determined whether the value of the corrected instantaneous weight determined at successive points of time corresponds with the value of the adapted, desired amount of material per unit of time 10 which is also supplied to the mass-flow adjusting means 22. To establish the said values, the mass-flow adjusting means 22 comprise first summing means 23 and second summing means 24. The first summing means 23 are provided with a memory, in which an initial weight determined by the electronic measuring device 20 is stored. Furthermore, the first summing means 23 comprise means to determine, each time after a certain time interval, the difference between the initial weight and the current weight established by the measuring device 20, and to sum a number of values. In the exemplary embodiment, the time interval is preferably 0.25 s, while 100 values are summed each time.

The accompanying table shows which are the $\Sigma(\Delta M)_{meas}$ (column 3) values supplied by the first summing means 23 at an initial weight of 1,000 kg (column 2) in a numerical example. With the $\Sigma(\Delta M)_{meas}$ values supplied by the summing means 23 it can thus be determined how much material (in kg) has been spread at a certain point of time; it can thus be read from the table that 5 kg has been spread at the point of time t=1, 11 kg at t=2, etc.

| Time | Values supplied by electronic measuring 20 to means 23 | Values device supplied by means 23 | Values supplied by means 24 | Difference |
|---|---|---|---|---|
| t=0 | 1000 * | | | |
| 1 | 995 | 5 | 5 | 0 |
| 2 | 989 | 11 | 10 | 1 |
| 3 | 982 * | 18 | 15 | 3 ** |
| 4 | 978 | 4 | 5 | 1 |
| 5 | 973 | 9 | 10 | 1 |
| 6 | 967 | 15 | 15 | 0 |
| 7 | 965 * | 17 | 20 | 3 ** |
| 8 | 957 | 25 | 25 | 0 |

* to memory in 23

** higher than threshold value (= 2 kgs)

Also for 100 values at a 0.25 s time interval, with the aid of the adapted, desired amount of material per unit of time, the summed desired value $\Sigma(\Delta M)_{des}$ of the weight to be spread per time interval, corresponding with the time interval between difference determinations in the first summing means 23, is determined with the said second summing means 24. In the numerical example rendered by the table, the desired weight $\Sigma(\Delta M)_{des}$ to be spread over the time interval between t = 0 and t = 1 amounts to 5 kgs, and that between t = 0 and t = 2 amounts to 10 kgs.

The mass-flow adjusting means 22 comprise also correction factor determining means 27 which are supplied with the values $\Sigma(\Delta M)_{meas}$ and $\Sigma(\Delta M)_{des}$ and by means of which it is feasible to determine a mass-flow correction factor which is supplied, through line 25, to mass-flow 10 correction means 26, enabling the latter to correct the desired mass flow 10 by this factor. The mass-flow correction signal is determined by means of a function belonging to the correction factor determining means 27 and by which the following calculation each time takes place:

$$\frac{\Sigma(\Delta M)_{des}}{\Sigma(\Delta M)_{meas}} \cdot f_A$$

where $f_A$ = current correction factor (at $f_A$ = 1 on t = 0). To avoid that the mass-flow correction signals are passed on to the mass-flow correction means at too high a frequency and that, consequently, there is a threat of instable control, it is determined beforehand that the mass-flow correction signals are supplied at a frequency not exceeding a certain maximum value. Hereto, a condition function 28 is included in the mass-flow adjusting means 22. With the aid of this condition function 28 it is determined whether the difference between $\Sigma(\Delta M)_{meas}$ and $\Sigma(\Delta M)_{des}$ is great enough to take to adjusting the desired mass flow 10. In the condition function 28, the value of the difference between $\Sigma(\Delta M)_{meas}$ and $\Sigma(\Delta M)_{des}$ is compared against a threshold value 29 previously introduced for adjusting the desired mass flow. Reverting to the numerical example in the table, this threshold value 29 may be assumed to be 2 kgs. From column 5 of the table it may be seen that up to the point of time t = 2 the difference between $\Sigma(\Delta M)_{meas}$ and $\Sigma(\Delta M)_{des}$ does not exceed this threshold value 29; therefore, notwithstanding that a difference between the desired and current mass flow exists, a mass-flow correction signal is not supplied and, consequently, no adjustment takes place. Not until point of time t= 3, the value of the difference between $\Sigma(\Delta M)_{meas}$ and $\Sigma(\Delta M)_{des}$ is greater than the threshold value 29 and, by means of the condition function, a signal is supplied through a line 30 to the correction factor determining unit 27, which subsequently supplies a mass-flow correction signal to the mass-flow correction means 26. A readjustment of the adapted, desired amount of material per unit of time is a fact at that time. After the delivery of the mass-flow correction signal, the correction factor determining means 27 supply a reset signal through a line 31 to the first summing means 23 and second summing means 24, so that these simultaneously start determining a new series of values for $\Sigma(\Delta M)_{meas}$ and $\Sigma(\Delta M)_{des}$. Upon the reset signal, the old initial weight will be removed from the memory of the first summing means 23 and the memory is then filled with the current value of the weight determined by the weight measuring unit 32; in the numerical example, the figure of 982 is thus stored into the memory at the point of time t = 3, while 1000 is erased from the memory (see column 1), whereupon the previous process starts all over again.

## Claims

1. A method of using an implement for spreading a material, such as fertilizer or seed, under the control of a microprocessor (2) in which, on the basis of values with regard to the working width (5), the speed of travel (6) and the desired amount of material to be spread on a unit of area (4) introduced into the microprocessor (2), a desired amount of material to be spread per unit of time (7) is defined and where also, before spreading the material, a predetermined adjustment factor (9) attuned to the physical properties of the material to be spread is introduced into the microprocessor (2), whereafter the microprocessor (2) adapts the defined value of the desired amount of material per unit of time (7) by means of the said adjustment factor (9), which adapted value (10) is used for the control of a metering device (1) through the intermediary of a standard characteristic and/or algorithm (11) stored in the microprocessor (2), while during the spreading of material, by means of a suitable programme provided in the microprocessor (2), on account of signals produced by a weight measuring unit (32) and which represent the decrease in weight of the material, the value related to, and adapted to the desired amount of material per unit of time (7) is corrected if it deviates from the measured amount of material spread per unit of time.

2. A method according to claim 1, whereby, at the start of spreading the material, an adjustment test is conducted, implying that, prior to spreading the material, the initial weight of at least a part of the implement including the material to be spread or the initial weight of the material to be spread is determined, which value is then stored into the microprocessor, while during the spreading of material, with the aid of summing means (24), the adapted and possibly corrected, desired decrease in weight per unit of time of the material to be spread is summed, and an attention signal is supplied by the implement when the summed desired decrease in weight equals a pre-defined value, the attention signal being an indication that the implement has to be halted, whereafter, for the termination of the adjustment test, the weight of at least a part of the implement including the material to be spread or the weight of the remaining material to be spread is determined, whereafter the weight of the actual amount of material spread, meaning the difference between the initial weight and the weight determined upon the attention signal for the adjustment test, is determined, whereafter the difference between the weight of the actual amount of material spread and the summed desired decrease in weight is determined, and where, in the event that there is a difference between the weight of the actual amount of material spread and the summed desired decrease in weight, the microprocessor (2) determines a correction factor related to the difference, by which factor the adapted and possibly corrected value of the desired amount of material per unit of time (10) is corrected.

3. A method according to claim 1 or 2, whereby the implement is provided with summing means (23) which, during the spreading of material, individually sum the adapted and possibly corrected value of the desired amount of material per unit of time and the value of the amount of material actually spread, and whereby, after a pre-determined number of summations, the difference between the two summations is determined and compared against a threshold value (29) previously introduced into the microprocessor (2), and whereby, if this threshold value (29) is exceeded, a correction factor is determined on account of the magnitude of this excess, by means of which correction factor the said value of the desired amount of material per unit of time (10) is corrected again.

4. A method according to claim 3 whereby, after the difference between the two summations has been determined for a first time, the difference is time and again determined over the same magnitude of the pre-determined number of summations as soon as, for both the desired amount of material per unit of time and the corresponding amount actually spread, a single new summation value has been supplied to the summing means.

5. A method according to any one of the preceding claims, by which method the first correction factor determined by the microprocessor (2) during operation is permitted to represent a value, which results in that the difference between the original value of the desired amount of material per unit of time and the corrected value is not more than 10%.

**6.** A method according to claim 5, whereby each subsequent correction factor determined by the microprocessor is permitted to represent a value, at which the difference amounts to not more than 5%.

**7.** A method according to claim 6, whereby an attention signal occurs after the maximum difference of 5% has been applied three times in succession.

**Patentansprüche**

**1.** Verfahren zur Verwendung eines Gerätes zum Streuen eines Gutes, wie z. B. Kunstdünger oder Saatgut, gesteuert durch einen Mikroprozessor (2), in welchem auf der Basis von in den Mikroprozessor (2) eingegebenen Werten bezüglich der Arbeitsbreite (5), der Fahrgeschwindigkeit (6) und der gewünschten, auf eine Flächeneinheit (4) auszustreuenden Gutmenge eine gewünschte, pro Zeiteinheit (7) auszustreuende Gutmenge ermittelt wird, und in welchem vor dem Streuen des Gutes auch ein vorgegebener Korrekturfaktor (9), der auf die physikalischen Eigenschaften des auszustreuenden Gutes abgestimmt ist, in den Mikroprozessor (2) eingegeben wird, wonach der Mikroprozessor (2) den ermittelten Wert der gewünschten Gutmenge pro Zeiteinheit (7) mit Hilfe des Korrekturfaktors (9) anpaßt und der angepaßte Wert (10) dazu verwendet wird, eine Dosiervorrichtung (1) mit Hilfe einer in dem Mikroprozessor (2) gespeicherten Standard-Charakteristik und/oder -Algorithmus (11) zu steuern, wobei während der Gutstreuung mit Hilfe eines geeigneten, im Mikroprozessor (2) gespeicherten Programms aufgrund von Signalen, die von einer Gewichtsmeßeinheit (32) erzeugt werden und die Gewichtsabnahme des Gutes repräsentieren, der diesbezügliche, an die gewünschte Gutmenge pro Zeiteinheit (7) angepaßte Wert korrigiert wird, wenn er von der gemessenen, pro Zeiteinheit ausgestreuten Gutmenge abweicht.

**2.** Verfahren nach Anspruch 1,
bei dem zu Beginn der Gutstreuung eine Einstellprobe durchgeführt wird, bei der vor dem Streuen des Gutes das Ausgangsgewicht zumindest eines Teiles des Gerätes einschließlich des Streugutes oder das Ausgangsgewicht des Streugutes ermittelt und dieser Wert dann im Mikroprozessor gespeichert wird, wobei während der Gutstreuung mit Hilfe einer Summiervorrichtung (24) die angepaßte und eventuell korrigierte gewünschte Gewichtsabnahme pro Zeiteinheit des Streugutes summiert und von dem Gerät ein Achtungssignal gegeben wird, wenn die summierte gewünschte Gewichtsabnahme einem vorgegebenen Wert entspricht, wobei das Achtungssignal anzeigt, daß das Gerät anzuhalten ist, worauf zur Beendigung der Einstellprobe das Gewicht zumindest eines Teiles des Gerätes einschließlich des Streugutes oder das Gewicht des verbleibenden Streugutes ermittelt wird, worauf das Gewicht der tatsächlichen Streugutmenge, also die Differenz zwischen dem Ausgangsgewicht und dem zum Zeitpunkt des Achtungssignals für die Einstellprobe ermittelten Gewicht, ermittelt wird, worauf die Differenz zwischen dem Gewicht der tatsächlichen Streugutmenge und der summierten gewünschten Gewichtsabnahme ermittelt wird, und worauf im Falle einer Differenz zwischen dem Gewicht der tatsächlichen Streugutmenge und der summierten gewünschten Gewichtsabnahme der Mikroprozessor (2) einen auf die Differenz bezogenen Korrekturfaktor ermittelt, um den der angepaßte und eventuell korrigierte Wert der gewünschten Gutmenge pro Zeiteinheit (10) korrigiert wird.

**3.** Verfahren nach Anspruch 1 oder 2,
bei dem das Gerät eine Summiervorrichtung (23) aufweist, die während der Gutstreuung den angepaßten und eventuell korrigierten Wert der gewünschten Gutmenge pro Zeiteinheit und den Wert der tatsächlich ausgestreuten Gutmenge einzeln summiert, und wobei nach einer vorgegebenen Anzahl von Summierungen die Differenz zwischen den beiden Summierungen ermittelt und mit einem zuvor in den Mikroprozessor (2) eingegebenen Grenzwert (29) verglichen wird, und wobei bei Überschreiten dieses Grenzwertes (29) anhand der Größe dieser Überschreitung ein Korrekturfaktor ermittelt wird, um den der Wert der gewünschten Gutmenge pro Zeiteinheit (10) erneut korrigiert wird.

**4.** Verfahren nach Anspruch 3,
bei dem nach der ersten Ermittlung der Differenz zwischen den beiden Summierungen die Differenz über dieselbe Größe der vorgegebenen Anzahl von Summierungen immer wieder ermittelt wird, sobald für die gewünschte Gutmenge pro Zeiteinheit wie auch für die entsprechende, tatsächlich ausgestreute Gutmenge ein einzelner neuer Summierungswert an die Summiervorrichtung geliefert wird.

**5.** Verfahren nach einem der vorhergehenden Ansprüche,

bei dem der erste Korrekturfaktor, der von dem Mikroprozessor (2) im Betrieb ermittelt wird, einen Wert repräsentieren kann, der zur Folge hat, daß die Differenz zwischen dem ursprünglichen Wert der gewünschten Gutmenge pro Zeiteinheit und dem korrigierten Wert nicht mehr als 10 % beträgt.

**6.** Verfahren nach Anspruch 5,
bei dem jeder darauffolgende, von dem Mikroprozessor ermittelte Korrekturfaktor einen Wert repräsentieren kann, bei dem die Differenz nicht mehr als 5 % beträgt.

**7.** Verfahren nach Anspruch 6,
bei dem ein Achtungssignal gegeben wird, wenn die maximale Differenz von 5 % dreimal nacheinander aufgetreten ist.

## Revendications

**1.** Procédé pour utiliser un équipement d'épandage d'une matière, telle que de l'engrais ou des semences, sous la commande d'un microprocesseur (2) dans lequel, sur la base de valeurs concernant la largeur de travail (5), la vitesse de déplacement (6) et la quantité voulue de matière à épandre sur une unité de surface (4) introduites dans le microprocesseur (2), une quantité voulue de matière à épandre par unité de temps (7) est définie et également, avant l'épandage de la matière, un facteur d'ajustement prédéterminé (9) en accord avec les propriétés physiques de la matière à épandre est introduit dans le microprocesseur (2), après quoi le microprocesseur (2) adapte la valeur définie de la quantité voulue de matière par unité de temps (7) par l'intermédiaire dudit facteur d'ajustement (9), laquelle valeur adaptée (10) est utilisée pour la commande d'un dispositif de dosage (1) par l'intermédiaire d'une caractéristique et/ou un algorithme standards (11) mémorisés dans le microprocesseur (2), tandis que lors de l'épandage de la matière, par l'intermédiaire d'un programme approprié prévu dans le microprocesseur (2), sur la base de signaux produits par une unité de mesure de poids (32) et qui représentent la diminution en poids de la matière, la valeur associée et adaptée à la quantité voulue de matière par unité de temps (7) est corrigée si elle s'écarte de la quantité mesurée de matière épandue par unité de temps.

**2.** Procédé selon la revendication 1, dans lequel, au début de l'épandage de la matière, un test d'ajustement est effectué, impliquant la détermination, avant d'épandre la matière, du poids initial au moins d'une partie de l'équipement comportant la matière à épandre, ou le poids initial de la matière à épandre, laquelle valeur est ensuite mémorisée dans le microprocesseur, tandis que lors de l'épandage de la matière, à l'aide de moyens d'addition (24), la diminution voulue adaptée, et potentiellement corrigée, en poids par unité de temps de la matière à épandre est additionnée, et un signal d'avertissement est émis par l'équipement lorsque la diminution voulue additionnée en poids est égale à une valeur prédéfinie, le signal d'avertissement étant une indication que l'équipement doit être arrêté, après quoi on détermine, pour terminer le test d'ajustement, le poids au moins d'une partie de l'équipement comportant la matière à épandre ou le poids de la matière restant à épandre, après quoi on détermine le poids de la quantité réelle de matière épandue, c'est-à-dire la différence entre le poids initial et le poids déterminé lors du signal d'avertissement pour le test d'ajustement, après quoi la différence entre le poids de la quantité réelle de matière épandue et la diminution voulue additionnée en poids est déterminée, et, dans le cas où il y a une différence entre le poids de la quantité réelle de matière épandue et la diminution voulue additionnée en poids, le microprocesseur (2) détermine un facteur de correction associé à la différence, facteur par lequel la valeur adaptée, et potentiellement corrigée, de la quantité voulue de matière par unité de temps (10) est corrigée.

**3.** Procédé selon la revendication 1 ou 2, dans lequel l'équipement est muni de moyens d'addition (23) qui, lors de l'épandage de la matière, additionnent individuellement la valeur adaptée et potentiellement corrigée de la quantité voulue de matière par unité de temps et la valeur de la quantité de matière réellement épandue, et dans lequel, après un nombre prédéterminé d'additions, la différence entre les deux additions est déterminée et comparée à une valeur de seuil (29) introduite précédemment dans le microprocesseur (2), et dans lequel, si cette valeur de seuil (29) est dépassée, un facteur de correction est déterminé en tenant compte de la grandeur de ce dépassement, facteur de correction par l'intermédiaire duquel ladite valeur de la quantité voulue de matière par unité de temps (10) est corrigée à nouveau.

**4.** Procédé selon la revendication 3 dans lequel, après que la différence entre les deux additions ait été déterminée une première fois, la différence est alors et à nouveau déterminée sur le même nombre prédéterminé d'additions dès que, pour la quantité voulue de matière par unité de temps et pour la quantité correspondante réellement épandue, une nouvelle valeur d'addition unique a été émise aux moyens d'addition.

**5.** Procédé selon l'une quelconque des revendications précédentes, dans lequel le premier facteur de correction déterminé par le microprocesseur (2) en service permet de représenter une valeur, qui résulte en ce que la différence entre la valeur d'origine de la quantité voulue de matière par unité de temps et la valeur corrigée n'est pas de plus de 10 %.

**6.** Procédé selon la revendication 5, dans lequel chaque facteur de correction suivant déterminé par le microprocesseur permet de représenter une valeur, au niveau de laquelle les quantités de différence ne sont pas de plus de 5 %.

**7.** Procédé selon la revendication 6, dans lequel un signal d'avertissement survient après que la différence maximum de 5 % ait été appliquée trois fois de suite.

FIG.1